Europäisches Patentamt

European Patent Office

Office européen des brevets

(11) Publication number: 0 674 158 A2

# EUROPEAN PATENT APPLICATION

(21) Application number: 95104234.0

(51) Int. Cl.⁶: $G01G\ 3/16$

(22) Date of filing: 22.03.95

(30) Priority: 22.03.94 US 215543

(43) Date of publication of application:
27.09.95 Bulletin 95/39

(84) Designated Contracting States:
DE FR GB IT

(71) Applicant: KITO ENGINEERING (1992) LTD.
Multipurpose Building 3,
Kiryat Weizmann Science Park
Ness Ziona 70400 (IL)

(72) Inventor: Baber, Isaac
31 Joanne LN
Buffalo, NY 14227-1345 (US)

Inventor: Plotnitsky, Igor
69/44 Lahish Blvd.
82000 Kiryat Gat (IL)
Inventor: Kupitman, Mark
11/2 Yod Alef Baadar
52335 Ramat Gan (IL)
Inventor: Hazin, Gregory
14/25 Hamelech Amatzia St.
77484 Ashod (IL)

(74) Representative: Patentanwälte Kirschner &
Grosse
Forstenrieder Allee 59
D-81476 München (DE)

(54) Mass measurement method and apparatus.

(57) A method, and associated apparatus, of measuring the mass M of a body located on a supporting platform to minimize the dynamical error during the settling time resulting when a measurement of mass is made within a predetermined time. The method includes subjecting the platform to a vibratory motion, measuring the change in period of vibration of the platform when the body is located on the platform to produce the direct measurement of mass $M_1$ of the body, measuring the weight of the body on the platform to produce the indirect measurement of mass $M_2$ of the body, and computing from these measurements the precise mass M of the body by combining the measurement $M_1$ and $M_2$ and assigning relative coefficients of proportionality to the measurement $M_1$ and $M_2$ such that a higher coefficient of proportionality is assigned to measurement $M_1$ at the beginning of the mass measurement time and a higher coefficient of proportionality is assigned to measurement $M_2$ at the end of the mass measurement time.

FIG.1

EP 0 674 158 A2

## FIELD AND BACKGROUND OF THE INVENTION

The present invention relates to a method and apparatus for measuring the mass of a body.

The mass (M) of a body is to be distinguished from the weight (W) of the body. While the weight of the body is a function of its mass, the mass M is the measurement of the body's inertia, i.e., the degree of its resistance to a change in velocity; whereas the weight W of a body is a localized quantity caused by the interaction of the body's mass and the local gravitational or acceleration field.

There are many techniques for measuring the mass M of a body.

One technique, sometimes referred to as an indirect method, determines mass by measuring the weight W of the body and then dividing the weight W by the value of the free-fall acceleration; i.e.,

$$M = W/g \qquad \qquad \text{Eq. 1}$$

wherein "g" is the free-fall acceleration; at the ground level of earth, g is approximately 9.81 $m/s^2$.

Another technique for measuring the mass M of a body, sometimes referred to as a direct method, is based on the influence the mass of a body has on the vibratory frequency or period of a vibratory system including mass; for example, for a system with a single degree of freedom:

$$M = C/w^2 \text{ or } M = T_o^2 \qquad \qquad \text{Eq. 2}$$

wherein C is the spring stiffness; w is the natural frequency of the mechanical vibratory system; and $T_o$ is the period.

The above-described indirect method of mass measurement based on weighing is more accurate than the direct method based on the vibratory system. Examples of the indirect method are described in US Patents 4,344,496 and 4,447,561. This method is usually implemented by the use of a load cell which converts the force applied by the body to electrical signals. However, load cells generally have a long settling time (e.g., in the order of several seconds), so that long periods of time are required for effecting the mass measurement if relatively high accuracy is needed. To reduce this long settling time, damped load cells have been provided, but such load cells are very expensive and, moreover, require individual design and tuning.

The above-described direct method of measuring mass, based on the change in frequency or period of a vibratory system caused by the body whose mass is being measured, is generally characterized by a shorter settling time but a lower accuracy than the above-described indirect method. Examples of the direct method based on a vibratory system are described in US Patents 3,612,198, 3,692,128, 4,070,900 and 4,418,774 and United Kingdon Patent No.1,369,035. Another advantage of this direct method is that the method can be used for measuring masses of bodies under weightless conditions (e.g., in outer space). However, as indicated earlier, the accuracy is less in this direct method than in the indirect method; this is particularly so because the frequency (or period) is influenced by the location of the body on the platform.

## OBJECTS AND BRIEF SUMMARY OF THE INVENTION

An object of the present invention is to provide a new method of measuring the mass M of a body which enables the measurement to be effected in a relatively small settling time (e.g., in the order of tens of microseconds, as distinguished from seconds in the direct method), and which still obtain relatively high accuracy.

According to the present invention, there is provided a method of measuring the mass M of a body located on a supporting platform to minimize the dynamical error resulting during the settling time when a measurement of the mass is made within a predetermined time, comprising: subjecting the platform to a vibratory motion; measuring the change in period of vibration of the platform when the body is located thereon to produce the direct measurement of mass $M_1$ of the body; measuring the weight of the body on the platform to produce the indirect measurement of mass $M_2$ of the body; and computing from the measurements $M_1$ and $M_2$ the precise mass M of the body by combining the measurements $M_1$ and $M_2$ and assigning relative coefficients of proportionality to the measurements $M_1$ and $M_2$ such that a higher coefficient of proportionality is assigned to measurement $M_1$ at the beginning of the mass measurement time and a higher coefficient of proportionality is assigned to measurement $M_2$ at the end of the mass measurement time.

According to further features in the preferred embodiment of the invention described below, the relative coefficents of proportionality are determined by measuring the rate of change in the mass M of the body

during the measurements $M_1$ and $M_2$ such that a higher coefficient of proportionality is assigned to measurement $M_1$ when the rate of change is relatively high, and a higher coefficient of proportionality is assigned to measurement $M_2$ when the rate of change is relatively low.

According to further features in the described preferred embodiment, the platform is subject to a vibratory motion by rectangular-wave pulses; also, the duration of the rectangular-wave pulses is controlled according to the mass of the body being measured, such as to increase the pulse duration for larger masses and to decrease the pulse duration for smaller masses. The latter features can be included in the above-described method of measuring mass, as well as in the conventional direct method of measuring mass based on the influence the mass has on a vibratory system, since even in that case, the foregoing features improve the measurement of mass as compared to the conventional system.

According to further features in the described preferred embodiment, the weight of the body is measured to produce the measurement $M_2$ by: applying an exciting frequency to a vibratory drive to subject the platform to the vibratory motion; sensing the displacements of the platform before and after the body whose mass is being measured is located thereon, to output an electrical signal corresponding to the displacements; filtering the outputted signal to remove therefrom the exciting frequency; and utilizing the filtered output signal to determine the measurement $M_2$. The foregoing features may also be used in the conventional indirect method of measuring mass, since when using such method it also provides improvements in reducing the settling time for high accuracy as compared to the conventional indirect method of mass measurement.

Further features and advantages of the invention will be apparent from the description below.

BRIEF DESCRIPTION OF THE DRAWINGS

The invention is herein described, by way of example only, with reference to the accompanying drawings, wherein:

Fig. 1 is a block diagram illustrating one form of system for measuring mass in accordance with the method of the present invention;

Fig. 2 illustrates the relation of mass to changes in the period of vibration when measuring the mass in the vibratory system of the described preferred embodiment of the present invention;

Fig. 3 illustrates the relation of error to settling time when measuring mass in accordance with the preferred embodiment of the invention described herein;

Fig. 4 illustrates the relation of displacement to time of measurement when the mass is measured according to the preferred embodiment of the invention described herein;

Fig. 5 is a waveform illustrating a further aspect of measuring mass in accordance with the present invention to further decrease the required settling time, and thereby to increase the speed of measurement;

Fig. 6 illustrates one form of mechanical construction that may be used in measuring mass according to the present invention;

and Fig. 7 is an enlarged fragmentary view of the platform used in the apparatus of Fig. 6, and particularly illustrating the provision of a plurality of position sensors to sense the position of the body whose mass is being measured.

DESCRIPTION OF A PREFERRED EMBODIMENT

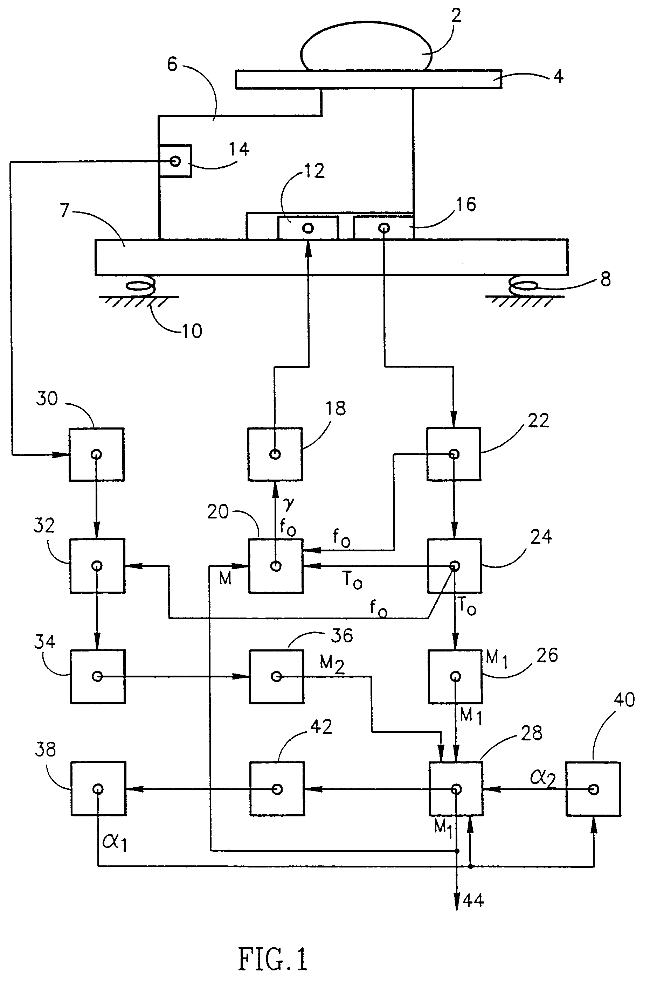

With reference first to Fig. 1, there is illustrated one form of apparatus for measuring the mass of a body 2 in accordance with the present invention. The illustrated apparatus includes a platform 4 on which body 2 is placed. Platform 4 is in turn mounted on a mechanical vibratory system 6 including a base 7 which is supported on a plurality of shock absorbers 8 with respect to a supporting surface 10. Platform 4 is vibrated by an electromagnetic exciter 12 coupled to the base 7. The mechanical vibrating system 6 further includes a displacement sensor 14, and a displacement (relative to base 7) rate-of-change (i.e., velocity) sensor 16 carried by the base 7.

The electromagnetic exciter 12 is energized by a power amplifier 18 so as to vibrate platform 4 continuously at the natural frequency $f_o$ of the mechanical vibrating system 6. Power amplifier 18 is controlled by a feedback signal from a control circuit 20 which supplies, to the power amplifier 18, rectangular-wave pulses of the frequency $f_o$ and pulse width $\gamma$. Control circuit 20 is in turn controlled by three feedback signals as follows:

(a) a sinusoidal signal of frequency $f_o$ outputted from the velocity-sensor 16 mounted on the base 7, amplified in amplifier 22 (preferably equipped with a filter), this signal being used to define the frequency

$f_o$ of the rectangular pulses applied by control system 20;

(b) an output signal from circuit 24 which, in turn, receives an input signal of the frequency $f_o$ from circuit 22, and detects the period of vibration, the period being designated T when platform 4 is not loaded by the body 2, and by $T_o$ when the platform is loaded by the body 2;

(c) and an output signal from circuit 28, which circuit determines the mass M of the body 2 placed on platform 4 in the following manner:

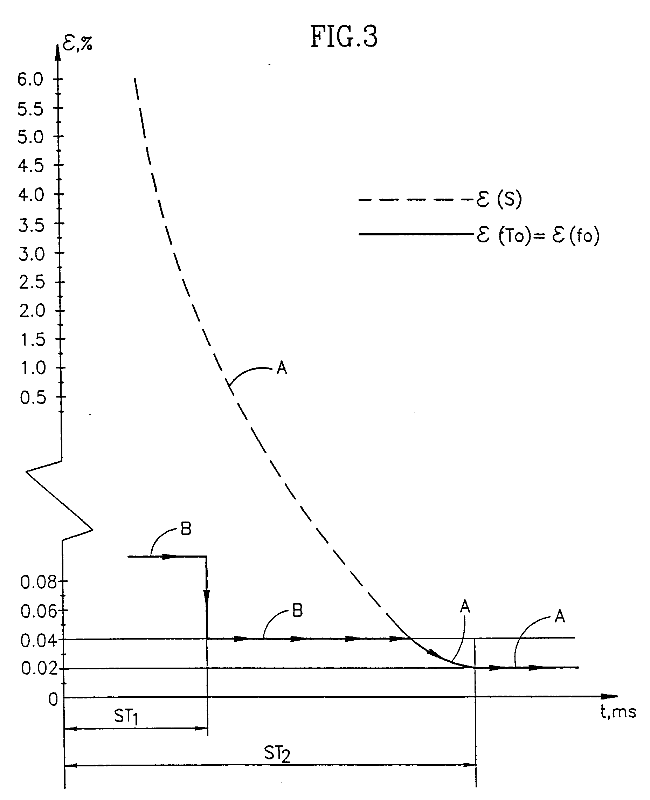

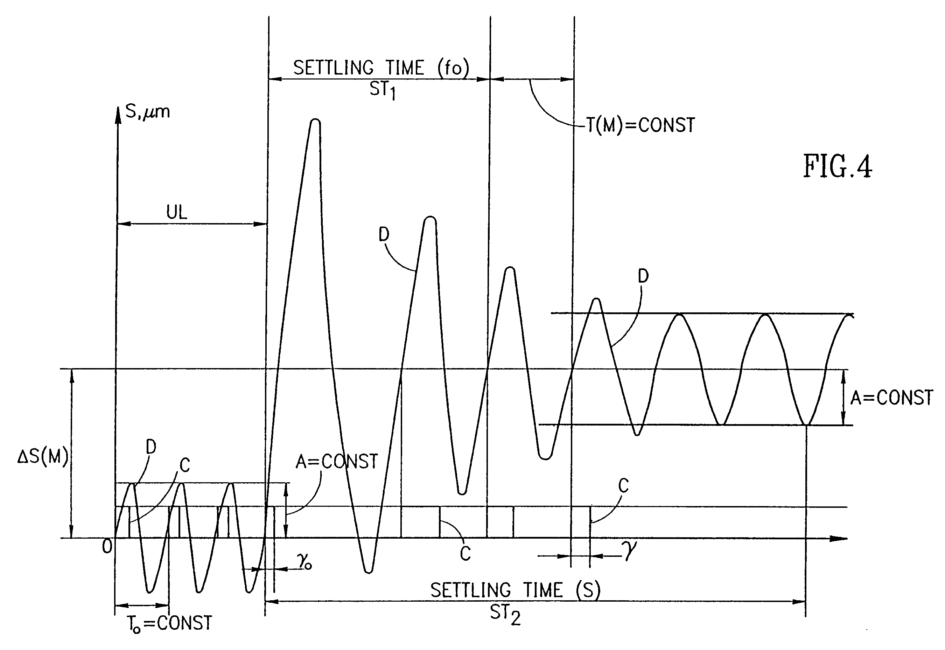

The mass of the body 2 is measured both by the direct technique described above, and also by the indirect technique described above. Thus, in measuring the mass according to the direct technique, the change in period $(T_o-T)$ of vibration of the platform 4 is measured when the body is placed thereon, which direct measurement of mass is indicated as $M_1$; and also the weight of the body 2 on the platform is measured to produce the indirect measurement of mass $M_2$. From these two measurements $M_1$ and $M_2$, there is then computed the precise mass M of the body, by assigning relative coefficients of proportionality to the measurements $M_1$ and $M_2$, such that a higher coefficient of proportionality is assigned to measurement $M_1$ at the beginning of the $M_1$ and $M_2$ measurement time t, and a higher coefficient of proportionality is assigned to measurement $M_2$ finishing the predetermined settling time, e.g., settling time to measurement $M_2$ ($ST_2$ - Fig. 3, Fig. 4).

Measurement M1 is effected by circuit 26 which receives the measured vibrational period $(T,T_o)$ from circuit 24, and thereby measures the change in period of vibration of the platform 4 both before body 2 is applied thereon, and also after body 2 is applied thereon; circuit 26 outputs a value corresponding to the change in period of vibration of the platform 4. This output value is called $M_1$ and is computed, e.g., according to the following equation:

$$M_1 = A_o\,(T_o\text{-}T) \;+\; A_1\,(T_o\text{-}T)^2 \qquad\qquad \text{Eq. 3}$$

where:

$A_o$ and $A_1$ are coefficients of proportionality determined as described more particularly below;

T is the natural period of vibration of the mechanical vibration system 6 when not loaded by body 2; and

$T_o$ is the period of vibration of the system when loaded by body 2.

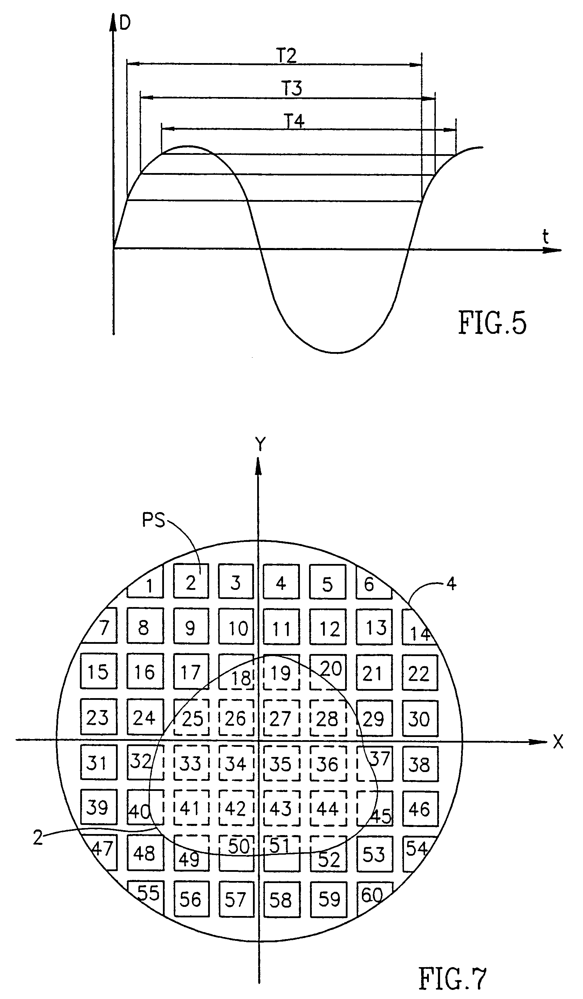

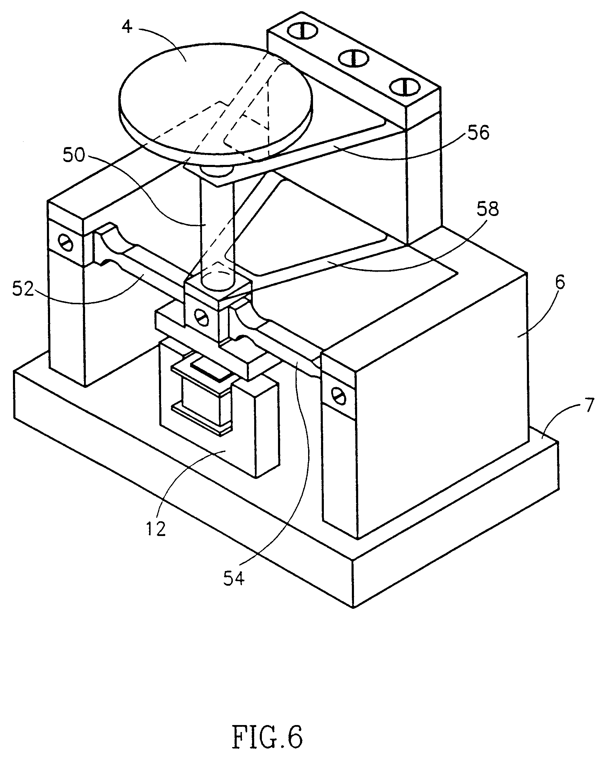

As indicated earlier, the vibration period is detected by the velocity sensor 16 producing an output applied via amplifier 22 to circuit 24. The manner in which circuit 24 measures the period $(T, T_o)$ is described more particularly below with respect to Fig. 5.

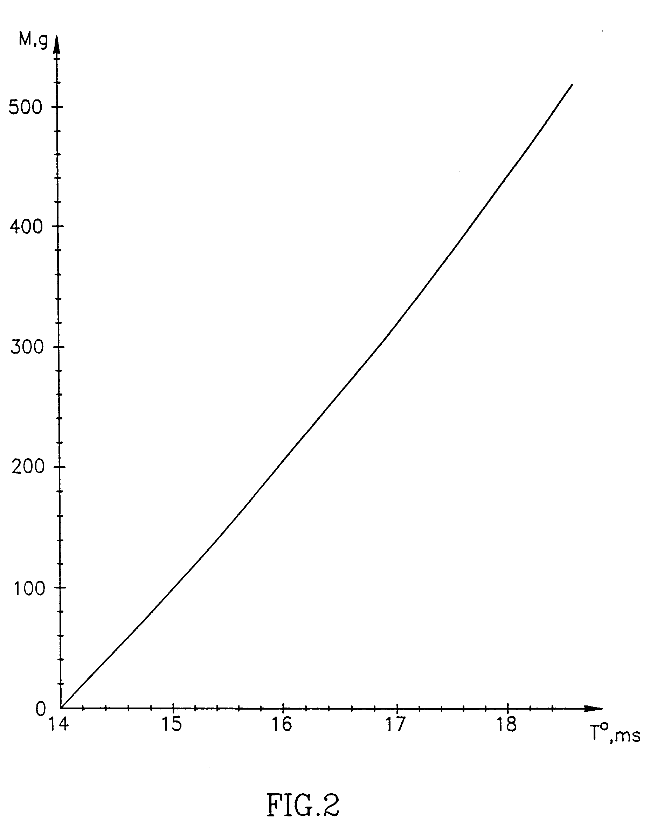

Fig. 2 illustrates how the vibrational period $(T, T_o)$ varies with the mass measurement. In the example illustrated in Fig. 2, the vibrational period is about 14 ms when no mass is applied, and increases substantially linearly with the mass as the mass increases to about 200 gm (at which point the period is 16 ms), and then somewhat non-linearly at higher masses. The first part of Equation 3 represents substantially the linear region of the curve in Fig. 2, and both the first and second parts of Equation 3 substantially compensates for the non-linear region.

The output of circuit 26 is a measurement of the mass according to the above-described direct technique based on the change in the period $(T_o-T)$ produced by the mass of the body 2 loaded upon the platform of the vibratory system 6. This measurement of mass is designated $M_1$. It is applied to circuit 28.

The system illustrated in Fig. 1 produces, in addition to the measurement $M_1$ of mass according to the direct vibratory technique, also a measurement of mass, indicated at $M_2$, based on the indirect technique of weight measurement. Thus, the displacement sensor 14 outputs an electrical signal corresponding to the displacement of the mechanic vibratory system 6. This signal is fed to a low-pass filter 30 and is then passed through another filter 32 which filters out the exciting frequency $f_o$ received from circuit 24. The filtered output from circuit 32 is applied to a circuit 34, which calculates the weight (W), and then feeds this value to another circuit 36 which calculates the mass according to Equation 1 above ($M = W/g$). This measurement of mass is designated $M_2$ and is applied, with the measurement of mass $M_1$ from circuit 26, to circuit 28.

Circuit 28 computes the mass M of the body 2 according, e.g., to the following equation:

$$M = \alpha_1.M_1 \;+\; \alpha_2.M_2 \qquad\qquad \text{Eq. 4}$$

where: $\alpha_1$ and $\alpha_2$ are coefficients of proportionality. These coefficients are continuously computed in blocks 38 and 40 according, e.g., to the following equations:

$$\alpha_1 = \beta_1 \;+\; \beta_2.dM/dt \qquad\qquad \text{Eq. 5}$$

4

$$\alpha_2 = 1-\alpha_1 \qquad\qquad \text{Eq. 6}$$

where $\beta_1$ and $\beta_2$ are relative coefficents of proportionality depending on the rate of change of the computed mass M. The rate of change (or velocity) of mass M is computed in circuit 42 which receives the measurement of mass M from circuit 28, and outputs this measurement to circuit 38. Circuit 38 computes $\alpha_1$ according to Equation 5 above, and circuit 40 computes $\alpha_2$ according to Equation 6. Circuit 28 thus outputs the measured mass M computed according to Equation 4, and output this value (M) at output port 44.

Filter 32 is automatically tuned according to the output frequency $f_o$ of circuit 24 which measures both the frequency $f_o$ and the vibratory period $(T,T_o)$ of system 6. The vibratory exciter 12 is energized by rectangular pulses of the repetition frequency $f_o$, with the pulse width $\gamma$ varying according to the mass M applied as an input to circuit 20 from circuit 28, such that the pulse width increases with an increase in the measured mass M.

The input signal of the vibratory exciter 12 is the rectangular pulses of repetition frequency $f_o$, with the pulse width $\gamma$ defined by the vibratory process parameters. Thus, is the vibratory period $T_o$ is increased, the pulse width $\gamma$ is also increased; and if the vibratory period $T_o$ is decreased, the pulse width $\gamma$ is also decreased. The arrangement is such that the acceleration (or displacement, or velocity) of the vibratory system 6 is kept at a predetermined level, e.g., 2 m/s$^2$.

The coefficients of proportionality $\beta_1$, $\beta_2$ in Equation 5 are determined such that if the rate of change of the mass (dM/dt), as measured in circuit 42 increases, the proportionality coefficient $\alpha_1$ in Equation 4 also increases, so that the measured mass M is constituted of a higher proportion of the measurement $M_1$ produced by the direct vibratory technique. On the other hand, if the rate of change of the measured mass (dM/dt) decreases, the relative value of $\alpha_1$ also decreases, so that the relative value of $\alpha_2$ increases, thereby increasing the proportion of the measurement $M_2$, based on the indirect measurement of mass (via the weighing technique) reflected in the final measurement of mass M.

Figs. 3 and 4 illustrate the manner in which the above-described technique for measuring mass M enables the measurement to be effected in a relatively short settling time and having a relatively low error, as compared to the conventional indirect or direct techniques of mass measurement.

Fig. 3 represents, upon dynamic loading a body upon platform 4, the relation of the error as a function of the time for measuring $M_2$, based on using, in accordance with the present invention, the indirect measurement of mass by measuring its weight according to e.g., Equation 1 above. As shown by curve A, the error is very high at the beginning, and drops to a very low value only at the end of the settling time, represented by time $ST_2$.

On the other hand, Fig. 3 represents upon dynamic loading of a body on platform 4, the relation of the error as a function of the measuring time t for measuring $M_2$ curve B (Fig. 3) based on using, in accordance with the present invention, the direct measurement of mass according to, e.g., Equation 3. As shown by curve B, the error is not very high at the beginning, and drops to a low value at the end of the settling time, represented by time $ST_1$.

Using the combination of measurement $M_1$ and $M_2$, according to, e.g., Equation 4, the error of the mass measurement in the present invention at the beginning of measurement time t is near 0.09% at the beginning for curve B, and at the end of the settling time $ST_2$ (Fig. 3, Fig. 4) is near 0.02% at the end of the settling time for curve A.

The present invention thus enables mass measurements to be made very quickly, in the order of tens of milliseconds, rather than in the order of seconds as required in the conventional weighing technique. It also enables better accuracy at the end of the settling time than in the conventional mass measurement direct technique.

The foregoing advantages are more clearly apparent from the curves illustrated in Fig. 4. This figure also illustrates the rectangular wave pulses applied to the electromagnetic exciter 12 and how the pulse width, as well as the vibratory period (T), varies with the measurement of mass M.

Thus, the leftmost part of the curves illustrated in Fig. 4, designated UL, illustrates the rectangular-wave pulses (curve C) applied by the electromagnetic exciter 12 to the vibrating system 6, and the sinusoidal signals (curve D) outputted by the displacement sensor 14. The period of a vibratory cycle in the unloaded condition of the platform 4 is indicated as T. The pulse width of the rectangular pulses applied to the exciter 12 is indicated by $\gamma$.

The regions indicated as $ST_1$ and $ST_2$ in Fig. 4 illustrates the settling time when the mass is measured according to the present invention, using the combined measurements $M_1$ and $M_2$ as described above and as set forth in Equation 4. It will thus be seen that when the mass is measured according to the present invention, as represented by settling time $ST_1$ for direct mass measurement, a relatively precise measurement can be produced in a relatively short time, after about only two cycles of the vibratory period; whereas when the measurement is according to a conventional weighing system, the settling time $ST_2$ is much larger before an accurate measurement can be made.

As described earlier, block 24 in Fig. 1 computes the vibrational period both during the unloaded condition T, and the loaded condition $T_o$. This computation can be made within one cycle of the sinusoidal output of the velocity sensor 16 (or the displacement sensor 14) in the manner illustrated in Fig. 5. Thus, as shown in Fig. 5, the vibrational period $(T, T_o)$ is measured by detecting the periods of a single cycle of the vibratory motion of the mechanical system 6 at a plurality of different levels, and then taking the average of those periods.

The period T of natural oscillation of the vibrating system 6 is continuously measured, both with the load of body 2 and without the load, and these measurements are stored. An absence of a load upon the platform 4 is defined by the value of the period $T_o$. Thus, if the measured period $T_o$ drops below a predetermined minimum $T_{min}$, this tells the system that the load has been removed, and the next vibratory period $T_o$ is then stored as the new current value.

Fig. 6 illustrates one form of mechanical construction that may be used for measuring mass according to the present invention. Thus, Fig. 6 illustrates the platform 4 mounted on the mechanical vibratory system 6 which includes the base 7. The shock absorbers 8 for mounting the base on a supporting surface 10, as illustrated in Fig. 1, are not shown in Fig. 6. Fig. 6, however, illustrates the electromagnetic exciter 12 which drives the mechanical vibratory system 6, including its platform 4, through vibrational cycles.

As shown in Fig. 6, platform 4 is carried at the upper end of a stem 50 which is coupled to the vibratory system 6, including its base 7, by a pair of elastic beams 52, 54, such that when the exciter 12 is energized, the platform 4 is vibrated towards and away from base 7. Platform 4, and particularly its stem 50, is connected to base 7 via a plurality of arms 56, 58, which define a parallelogram connection of the platform to the base, constraining the platform to vibrate only perpendicularly to the base.

Circuit 26 in Fig. 1 computes the coefficients of proportionately $A_0$, $A_1$ in Equation 4 for computing measurement $M_1$ as described above.

Circuit 28 in Fig. 1, which computes the mass M according to Equation 4 as described above, takes into account the location of the body 2 on the load platform 4. For this purpose, the load platform 4 includes, as shown in Fig. 7, a plurality of sensors PS (e.g., piezoelectric elements) which thereby detect the location of the body 2 on the platform 4. The location of body 2 on platform 4 is taken into account by the coefficients of proportionality $A_o$ and $A_1$ included in Equation 3 for producing the measurement $M_1$, according to the following equations:

$$A_0 = \bar{A}_0 + C_0 \frac{1}{N} \sum_i^N X_i + D_0 \frac{1}{N} \sum_i^N Y_i \qquad Eq. \ 7$$

$$A_1 = \bar{A}_1 + C_1 \frac{1}{N} \sum_i^N X_i + D_1 \frac{1}{N} \sum_i^N Y_i \qquad Eq. \ 8$$

where

$\bar{A}_o$ and $\bar{A}_1$ are values of the proportionality coefficients $A_o$ and $A_1$ if the body 2 is located at the center of load platform 4;

$C_o$, $C_1$, $D_o$ and $D_1$ are correction coefficients;

$X_i$ and $Y_i$ are coordinates of the sensors responding to the body 2 loaded upon platform 4;

N is the number of the sensors responding to the body 2.

While the invention has been described with respect to one preferred embodiment, it will be appreciated that many other variations, modifications and applications of the invention may be made.

**Claims**

1. A method of measuring the mass M of a body located on a supporting platform to minimize the dynamical error during the settling time resulting when a measurement of the mass is made within a predetermined time, comprising:

subjecting the platform to a vibratory motion;

measuring the change in period of vibration of the platform when the body is located thereon to produce the direct measurement of mass $M_1$ of the body;

measuring the weight of the body on the platform to produce the indirect measurement of mass $M_2$ of the body;

and computing from said measurements $M_1$ and $M_2$ the precise mass M of the body by combining the measurements $M_1$ and $M_2$ and assigning relative coefficients of proportionality to the measurements $M_1$ and $M_2$ such that a higher coefficient of proportionality is assigned to measurement $M_1$ at the beginning of the mass measurement time and a higher coefficient of proportionality is assigned to measurement $M_2$ at the end of the mass measurement time.

2. The method according to Claim 1, wherein said relative coefficients of proportionality are determined by measuring the rate of change in the mass M of said body during said measurements $M_1$ and $M_2$ such that a higher coefficient of proportionality is assigned to measurement $M_1$ when the rate of change is relatively high, and a higher coefficient of proportionality is assigned to measurement $M_2$ when the rate of change is relatively low.

3. The method according to Claim 1, wherein said platform is subjected to a vibratory motion by rectangular-wave pulses.

4. The method according to Claim 3, including controlling the duration of the rectangular-wave pulses according to the mass of the body being measured such as to increase the pulse duration for larger masses and to decrease the pulse duration for smaller masses.

5. The method according to Claim 1, wherein said relative coefficients of proportionality are determined also by sensing the location of the body with respect to the center of said platform.

6. The method according to Claim 1, wherein said change in period of vibration is measured both before and after the body is placed on said platform by detecting the periods of a single cycle of the vibratory motion of the platform at a plurality of different levels, and taking the average of said periods.

7. The method according to Claim 1, wherein the weight of the body is measured to produce the measurement $M_2$ by:

applying an exciting frequency to a vibratory drive to subject the platform to said vibratory motion;

sensing the displacements of the platform before and after the body whose mass is being measured is located thereon, to output an electrical signal corresponding to said displacements;

filtering said outputted signal to remove therefrom said exciting frequency;

and utilizing the filtered output signal to determine the measurement $M_2$.

8. A method of measuring the mass of a body placed on a platform, comprising:

subjecting the platform to a vibratory motion by rectangular-wave pulses;

controlling the duration of the rectangular-wave pulses according to the mass of the body being measured such as to increase the pulse duration for larger masses and to decrease the pulse duration for smaller masses;

and measuring the change in period of vibration of the platform when the body is placed thereon to produce a measurement of the mass.

9. A method of measuring the mass of a body placed on a platform, comprising:

applying an exciting frequency to a vibratory drive to subject the platform to a vibratory motion;

sensing the displacements of the platform before and after the body whose mass is being measured is located thereon, to output an electrical signal corresponding to said displacements;

filtering said outputted signal to remove therefrom said exciting frequency;

and utilizing the filtered output signal to determine the measurement of the mass of the body.

10. Apparatus for measuring the mass M of a body comprising:

a platform;

a vibrating drive subjecting the platform to a vibratory motion;

means for measuring the change in period of vibration of the platform when the body is located thereon to produce the measurement $M_1$;

means for measuring the weight of the body on the platform to produce the measurement $M_2$;

EP 0 674 158 A2

and computing means for computing from said measurements $M_1$ and $M_2$ the mass M of the body by combining the measurements $M_1$ and $M_2$ and assigning relative coefficients of proportionality to the measurements $M_1$ and $M_2$ such that a higher coefficient of proportionality is assigned to measurement $M_1$ at the beginning of the mass measurement time and a higher coefficient of proportionality is assigned to $M_2$ at the end of the mass measurement time.

11. The apparatus according to Claim 9, wherein said computing means includes means for measuring the rate of change in the mass M of said body during said measurements $M_1$ and $M_2$ and for computing said relative coefficient of proportionality such that a higher coefficient of proportionality is assigned to measurement $M_1$ when the rate of change is relatively high, and a higher coefficient of proportionality is assigned to measurement $M_2$ when the rate of change is relatively low.

12. The apparatus according to Claim 10, wherein said platform is subjected to a vibratory motion by rectangular-wave pulses applied to said vibrating drive.

13. The apparatus according to Claim 12, including means for controlling the duration of the rectangular-wave pulses according to the mass of the body being measured such as to increase the pulse duration for larger masses and to decrease the pulse duration for smaller masses.

14. The apparatus according to Claim 10, wherein said platform includes sensors for sensing the location of the body with respect to the center of said platform, and for utilizing said sensed locations in determining said relative coefficients of proportionality.

15. The apparatus according to Claim 10, wherein said means for measuring the weight of the body to produce the measurement $M_2$ comprises:
    means for applying an exciting frequency to said vibratory drive to subject the platform to said vibratory motion;
    a sensor for sensing the displacement of the platform when the body whose mass is being measured is applied thereon, to output an electrical signal corresponding to said displacement;
    a filter for filtering said outputted signal to remove therefrom said exciting frequency;
    and means utilizing the filtered output signal to determine the measurement $M_2$.

16. The apparatus according to Claim 10, wherein said means for measuring the change in period of vibration measures same both before and after the body is located on said platform by detecting the periods of a single cycle of the vibratory notion of the platform at a plurality of different levels and taking the average of said periods.

17. Apparatus for measuring the mass of a body, comprising:
    a vibrating drive for subjecting the platform to a vibratory motion by rectangular-wave pulses;
    means for controlling the duration of the rectangular-wave pulses according to the mass of the body being measured such as to increase the pulse duration for larger masses and to decrease the pulse duration for smaller masses;
    and means for measuring the change in period of vibration of the platform when the body is placed thereon to produce a measurement of the mass.

18. Apparatus for measuring the mass of a body, comprising:
    a platform;
    a vibrating drive;
    means for applying an exciting frequency to said vibratory drive to subject the platform to a vibratory motion;
    a sensor for sensing the displacement of the platform when the body whose mass is being measured is applied thereon, to output an electrical signal corresponding to said displacement;
    a filter for filtering said outputted signal to remove therefrom said exciting frequency;
    and means for utilizing the filtered output signal to determine the measurement of the mass of the body.

19. The apparatus according to Claim 10, wherein said apparatus further includes:
    a base on which said vibratory drive is mounted;

8

elastic members mounting said platform to said base, permitting said platform to vibrate by said drive towards and away from said base;

and a plurality of arms forming a parallelogram connection of said platform to said base constraining said platform to vibrate only perpendicularly to said base.

FIG.1

FIG.2

# FIG.3

FIG.4

FIG.5

FIG.7

FIG.6